# EUROPÄISCHE PATENTSCHRIFT

(11) **EP 4 215 350 B1**
(45) Veröffentlichungstag und Bekanntmachung des Hinweises auf die Patenterteilung: **23.07.2025**
(21) Anmeldenummer: 23150126.3
(22) Anmeldetag: 03.01.2023
(51) Int. Cl.: B29D 30/28, B29D 30/32

(54) **VERFAHREN ZUR HERSTELLUNG EINES LUFTREIFENS UND REIFENBAUMASCHINE ZUR DURCHFÜHRUNG DES VERFAHRENS**
METHOD FOR MANUFACTURING A PNEUMATIC TYRE AND TYRE BUILDING MACHINE FOR IMPLEMENTING THE METHOD
PROCÉDÉ DE FABRICATION D'UN PNEUMATIQUE ET MACHINE DE FABRICATION DE PNEUMATIQUE POUR LA MISE EN OEUVRE DU PROCÉDÉ

(30) Priorität: 25.01.2022 DE 102022200811
(43) Veröffentlichungstag der Anmeldung: 26.07.2023
(73) Patentinhaber: Continental Reifen Deutschland GmbH, 30175 Hannover (DE)
(72) Erfinder: Knull, Stephan, 30165 Hannover (DE)
(74) Vertreter: Continental Corporation

(56) Entgegenhaltungen:
- WO-A1-2006/003057
- WO-A1-2009/063264
- JP-A- H1 034 767
- JP-U- S5 077 471
- KR-B1- 102 258 523

## Beschreibung

Die Erfindung betrifft ein Verfahren zur Herstellung eines Luftreifens mit einer Reifenkarkasse und wenigstens einer eine Kernfahne aufweisenden Reifenwulst. Das Verfahren weist einen ersten Positionierschritt auf, umfassend ein Positionieren eines Karkassengeweberohlings an einer eine Trommelkontur aufweisenden Karkasstrommel. Weiterhin weist das Verfahren einen auf den ersten Positionierschritt folgenden zweiten Positionierschritt auf, umfassend ein Positionieren der Kernfahne an dem Karkassengeweberohling. Das Verfahren weist darüber hinaus einen auf den zweiten Positionierschritt folgenden Lagenumschlagsschritt auf, umfassend ein Umschlagen eines Umschlagsabschnitts des Karkassengeweberohlings um die Kernfahne herum.

Weiterhin betrifft die Erfindung eine Reifenbaumaschine zur Durchführung des Verfahrens zur Herstellung eines Luftreifens. Die Reifenbaumaschine weist eine Karkasstrommel und eine von der Karkasstrommel separat ausgeführte Kernsetzvorrichtung auf, wobei die Kernsetzvorrichtung zum Halten einer Kernfahne unabhängig von der Karkasstrommel und zum Heranführen der Kernfahne an die Karkasstrommel in deren axialer Richtung eingerichtet ist.

Die Kernfahne, auch Apex genannt, erfüllt in einem Luftreifen mehrere Funktionen, so etwa, einen sicheren Sitz des Luftreifens auf einer Felge zu gewährleisten. Bei einem Luftreifen, der mit einem Verfahren der eingangs genannten Art auf einer Reifenbaumaschine der eingangs genannten Art hergestellt wird, ist die Kernfahne bei einem fertig hergestellten Luftreifen in die Reifenwulst eingebettet. Die Kernfahne erstreckt sich dabei zumeist konzentrisch mit einem Reifenkern, welcher in radialer Richtung an der Innenseite der umlaufenden Kernfahne angeordnet ist und zusammen mit der Kernfahne in der Reifenwulst eingebettet ist. Die Kernfahne bestimmt maßgeblich die Geometrie der Reifenwulst und deren Oberfläche, mit der der Luftreifen bei der Anwendung an einem Felgenhorn einer Felge anliegt. Bei dem fertigen Luftreifen wirkt die Kernfahne stabilisierend und erhöht die Verwindungssteifigkeit des Luftreifens, was wiederum der Fahrstabilität und Lenkstabilität eines Fahrzeugs zugutekommt, welches unter Verwendung der entsprechenden Luftreifen gefahren wird.

Bei dem Verfahren der eingangs genannten Art wird häufig der Lagenumschlagsschritt durchgeführt, indem nach dem zweiten Positionierschritt ein Umbuckbalg expandiert wird. Der Umbuckbalg erfährt dabei eine Expansion in radialer Richtung nach außen, wodurch der Umbuckbalg den Umschlagsabschnitt um den Reifenkern und die Kernfahne herum führt. In einer weitergehenden Expansion mit einer Komponente auch in axialer Richtung führt der Umbuckbalg den Umschlagsabschnitt weiter um die Kernfahne herum und drückt den Umschlagsabschnitt von außen in axialer und wenigstens teilweise in radialer Richtung zu der Karkasstrommel hin gerichtet an die Kernfahne und den Reifenkern heran, welche dadurch wiederum auf den darunter liegenden Abschnitt des Karkassengeweberohlings drücken. Hierdurch wird der auf der Karkasstrommel positionierte Abschnitt des Karkassengeweberohlings, die darauf angeordnete Kernfahne, der Reifenkern und der um die Kernfahne und den Reifenkern herumgeschlagene Umschlagsabschnitt an die Trommelkontur angeformt und so der Lagenumschlag erzeugt. Dies kann mit Anwendung von Klebstoffen unterstützt werden, um den Lagenumschlag vor der Weiterverarbeitung, insbesondere bis zur Vulkanisation, vor ungewollten Verformungen zu schützen.

Nachteilig hieran ist, dass bei dieser Herstellung des Lagenumschlags die Verbindung, insbesondere die Verklebung, zwischen Karkassengeweberohling und der darin eingeschlagenen Kernfahne aufgrund von Lufteinschlüssen Schwachstellen aufweisen kann. Ebenfalls kann sich die Kernfahne entgegen der erfolgten Anformung wieder in gewissem Maße zurückverformen. Zudem reduziert eine unvollständige Verbindung bzw. Verklebung zwischen Karkassengeweberohling und Kernfahne die Verwindungssteifigkeit eines hieraus erzeugten Reifens und reduziert die Fahrstabilität, Lenkstabilität und Komfortempfinden von Passagieren eines Fahrzeugs.

Die JP S50 77471 U offenbart eine Wulstfüller-Klemmvorrichtung für Kernfahnen. Die Kernfahne wird mittels einer Kernsetzvorrichtung an einer Karkasstrommel positioniert. Anschließend wird die Kernfahne durch einen aufblasbaren Balg an die Karkasstrommel angedrückt.

Die Aufgabe der vorliegenden Erfindung ist, das Verfahren und die Reifenbaumaschine der eingangs genannten Art zu verbessern, insbesondere, um besonders stabile und formhaltige Lagenumschläge bei Luftreifen zu erzielen.

Gemäß Anspruch 1 wird die Aufgabe dadurch gelöst, dass bei einem Verfahren der eingangs genannten Art nach dem zweiten Positionierschritt und vor dem Lagenumschlagssschritt ein Anformschritt durchgeführt wird. Bei dem Anformschritt wird die Kernfahne mittels einer Anformkraft von wenigstens einer fluidbetätigbaren Anformvorrichtung auf den an der Karkasstrommel positionierten Karkassengeweberohling angepresst und dadurch an die Trommelkontur angeformt. Die fluidbetätigbare Anformvorrichtung weist einen ersten druckbeaufschlagbaren und expandierbaren Balg, der beim Anformschritt die Kernfahne mit einem ersten Anteil der Anformkraft als Druck in Axialrichtung der Karkasstrommel an den Karkassengeweberohling anformt, und einen zweiten druckbeaufschlagbaren und expandierbaren Balg, der beim Anformschritt die Kernfahne mit einem zweiten Anteil der Anformkraft als Druck in Radialrichtung der Karkasstrommel an den Karkassengeweberohling anfomt.

Hierdurch ist es möglich, eine besonders homogene Verteilung der Anformkraft auf die Kernfahne auszuüben und somit eine besonders homogene Verbindung, insbesondere Verklebung, zwischen der Kernfahne und dem an der Karkasstrommel positionierten Karkassengeweberohling auszuüben. Die Verbindung, insbesondere Verklebung, kann dabei unmittelbar zwischen der Kernfahne und dem Karkassengeweberohling durch Kontaktieren erfolgen. Alternativ kann die Verbindung, insbesondere Verklebung, auch mittelbar erfolgen, insbesondere durch ein zwischen der Kernfahne und dem Karkassengeweberohling angeordnetes Wulstverstärkerelement, beispielsweise einen Flipper oder Chipper, insbesondere derart wie an späterer Stelle beschrieben. In diesem Sinne liegt eine Verklebung der Kernfahne mit dem Karkassengeweberohling auch in Fällen vor, bei denen die Kernfahne mit einem Wulstverstärkerelement verklebt ist oder wird, welches wiederum mit dem Karkassengeweberohling verklebt ist oder wird. Die besonders homogene Verteilung der Anformkraft hat den Vorteil, dass Lufteinschlüsse zwischen der Kernfahne und dem Karkassengeweberohling, und falls vorhanden ebenso zwischen dem Wulstverstärkerelement und der Kernfahne sowie zwischen dem Wulstverstärkerelement und dem Karkassengeweberohling, deutlich reduziert werden gegenüber Verfahrensführungen ohne diesen separaten Anformschritt. Ein weiterer Vorteil besteht darin, dass eine deutlich größere Anformkraft mittels dieses zusätzlichen Anformschritt aufgebracht werden kann als beispielsweise mittels eines Umbuckbalgs, welcher als einen integralen Verfahrensschritt das Umschlagen des Umschlagsabschnitts und das darauf folgende erstmalige Zusammendrücken bei dem Lagenumschlagssschritt bewerkstelligt.

Der zusätzliche Anformschritt vor dem Lagenumschlagssschritt erlaubt zudem ein besonders gutes Anformen der Kernfahne an die Trommelkontur der Karkasstrommel. Durch das Anpressen wird die Geometrie der Kernfahne besonders gut an die Trommelkontur angeglichen und erreicht die gewünschte Geometrie, die sie als Bestandteil des Wulstkerns haben soll, mit geringeren Maßtoleranzen als ohne einen solchen separaten Anformschritt. Die Trommelkontur entspricht beispielsweise der Kontur der Trommelschulter der Karkasstrommel. Ein Vorteil des Verfahrens und der Reifenbaumaschine ist dabei die Kompatibilität mit diversen verschiedenen Konturen von Karkasstrommeln, was das Verfahren und die Reifenbaumaschine variabel hält.

Mittels des Anformschritts wird die Anformkraft von einer Anformvorrichtung präziser und homogener auf die Kernfahne übertragen, als wenn ein solches Anformen lediglich im Rahmen des Lagenumschlagsschritts erfolgt. Insbesondere wird die Anformkraft nicht zunächst auf einen bereits um die Kernfahne herumgeschlagenen Umschlagsabschnitt des Karkassengeweberohlings ausgeübt, von welchem die Anformkraft auf die Kernfahne dann weiter übertragen wird. Die Übertragung der Anformkraft von einer Anformvorrichtung auf die Kernfahne, ohne dass dabei bereits der Umschlagsabschnitt des Karkassengeweberohlings dazwischen angeordnet ist, ermöglicht somit eine besonders gute Anpassung an die Trommelkontur. Dies verleiht der Kernfahne als Ergebnis des Anformschritt durch das Andrücken an die Trommelkontur eine besonders präzise Herstellung der gewünschten Geometrie. Der Anformschritt ermöglicht dabei, dass solche Bereiche der Kernfahne, die stärker deformiert, insbesondere gebogen werden und/oder einen größeren deformierten Querschnitt aufweisen, mit höheren Drücken oder Biegemomenten beaufschlagt werden als andere Bereiche der Kernfahne, die weniger stark deformiert werden und/oder einen kleineren deformierten Querschnitt aufweisen. Der Anformschritt ermöglicht somit eine besonders adäquate Anpassung des Spannungszustandes innerhalb der Kernfahne für den Vorgang des gewünschten Anformens an die Trommelkontur.

Zu diesem Zweck kann die Anformvorrichtung beispielsweise formflexible Elemente aufweisen, die für das Anpressen der Kernfahne mit dieser oder mit einem etwaig auf der Kernfahne angeordneten Wulstverstärkerelement in unmittelbaren Kontakt treten und somit die Anformkraft auf die Kernfahne ausüben.

Als Ergebnis des Anformschritts ist die Kernfahne gemäß der Vorgabe durch die Trommelkontur auf dem Karkassengeweberohling angepresst und besonders zuverlässig und homogen mit diesem verbunden, insbesondere verklebt. Ein weiterer Vorteil besteht darin, dass somit Separationen der Reifenkomponenten im weiteren Fertigungsprozess unwahrscheinlicher werden als in Verfahrensführungen ohne einen solchen Anformschritt. Somit wird die Prozesssicherheit deutlich erhöht und die Wahrscheinlichkeit von Ausschuss reduziert.

Soweit vorstehend von dem Platzieren der Kernfahne an dem Karkassengeweberohling, einem Anpressen an den Karkassengeweberohling und einem Anformen an die Trommelkontur die Rede ist, so kann dies als erste Alternative jeweils lediglich die Kernfahne betreffen, oder, als zweite Alternative, die Kombination aus der Kernfahne mit einem mit der Kernfahne verbundenen Wulstkern. Bei der ersten Alternative ist somit möglich, dass zunächst lediglich die Kernfahne an dem Karkassengeweberohling positioniert und angeformt wird und erst anschließend ein Wulstkern konzentrisch zur Kernfahne ergänzt wird. Ebenso ist möglich, dass zunächst ein Wulstkern an dem Karkassengeweberohling positioniert wird und anschließend die Kernfahne konzentrisch zum Wulstkern ergänzt wird. Bei der zweiten Alternative wird in dem Anformschritt die bereits mit dem Wulstkern konzentrisch verbundene Kernfahne entsprechend der vorgenannten und nachfolgenden Lehre mittels einer Anformkraft auf den an der Karkasstrommel positionierten Karkassengeweberohling angepresst und dadurch an die Trommelkontur angeformt. Die zweite Alternative umfasst dabei auch solche möglichen Varianten der Verfahrensführung, bei denen der Wulstkern und die Kernfahne um wenigstens ein zusätzliches Wulstverstärkerelement ergänzt sind, insbesondere während des ersten Positionierschritts und/oder während des zweiten Positionierschritts und/oder während des Anformschritts. Als Wulstverstärkerelement kann beispielsweise ein Flipper ergänzt sein, das heißt ein um den Wulstkern und die Kernfahne herumgeschlagenes Winkelgewebe, welches Textil aufweist. Auch ist möglich, dass als Wulstverstärkerelement ein Chipper ergänzt ist, das heißt ein auf den Wulstkern und die Kernfahne einseitig aufgelegtes und nicht darum herumgeschlagenes Winkelgewebe, welches Textil und/oder Stahl aufweist. Selbstverständlich ist auch bei der ersten Alternative die Verwendung solcher Wulstverstärkerelemente grundsätzlich nicht ausgeschlossen, beispielsweise in Form des Auflegens eines Chippers auf die Kernfahne und/oder den Wulstkern vor dem Durchführen des Anformschritts.

Zur Weiterführung des Verfahrens zur Herstellung eines Luftreifens folgt dann zumeist der Lagenumschlagsschritt, bei dem der Umschlagsabschnitt des Karkassengeweberohlings um die Kernfahne und den Wulstkern herum gelegt wird und in einem zusätzlichen Anformschritt auf die Kernfahne, den Wulstkern und einen Teil des Karkassengeweberohlings angedrückt wird. Im Ergebnis wird eine Reifenwulst eines Luftreifens erreicht, die aufgrund des besonders maßhaltig gefertigten Wulstkerns und der besonders vollständigen Verbindung, insbesondere Verklebung, der Komponenten der Reifenwulst einen vorteilhaften Beitrag zur Verwindungssteifigkeit eines hieraus im weiteren Verfahrensgang hervorgehenden Luftreifens leistet. Ein solcher Luftreifen weist eine besonders hohe Fahrstabilität und Lenkstabilität auf.

Gemäß der Erfindung ist vorgesehen, dass bei dem Anformschritt die Anformkraft von wenigstens einer fluidbetätigbaren Anformvorichtung auf die Kernfahne ausgeübt wird. Hierbei wird die Anformkraft besonders homogen über eine oder mehrere kraftübertragende Kontaktflächen der Anformvorrichtung auf die Kernfahne übertragen. Dies hat den Vorteil, dass während des fortschreitenden Anformens der Kernfahne an die Trommelkontur die Kontaktflächen der sich verformenden Kernfahne nachgeführt werden können. Hierdurch wird eine weitere Verbesserung der Fixierung, insbesondere der Verklebung, der Kernfahne an dem Karkassengeweberohling erzielt. In Fällen, in denen ein Wulstverstärkerelement, insbesondere ein Flipper oder Chipper, an der Kernfahne und/oder dem Wulstkern ergänzt ist, wird die Anformkraft ganz oder teilweise auch auf dieses Wulstverstärkerelement ausgeübt. Dies bedeutet, dass ein an der Kernfahne und dem Wulstkern anliegendes Wulstverstärkerelement bei dem Anformschritt entsprechend der Umformung der Kernfahne mit umgeformt wird. Soweit sich bei dem Anformschritt ein solches Wulstverstärkerelement zwischen der oder den kraftübertragenden Kontaktflächen der Anformvorrichtung und der Kernfahne und/oder dem Wulstkern befindet, wird in diesem Bereich die Anformkraft mittelbar durch das Wulstverstärkerelement auf die Kernfahne und/oder den Wulstkern übertragen.

Die Aufgabe wird auch gelöst durch eine Reifenbaumaschine nach Anspruch 8, bei der die Kernsetzvorrichtung wenigstens eine fluidbetätigte Anformvorrichtung aufweist, mittels welcher von der Kernsetzvorrichtung eine Anformkraft auf eine zwischen der Karkasstrommel und der Kernsetzvorrichtung anordenbare Kernfahne ausübbar ist.

Die Fluidbetätigbarkeit bedeutet, dass die für das Anformen aufzubringende mechanische Arbeit durch das Einleiten einer Flüssigkeit oder eines Gases in einen Fluidraum aufgebracht wird. Beispielsweise kann dies mittels pneumatisch oder hydraulisch vergrößerbarer Körper oder mittels hydraulisch oder pneumatisch betätigbarer Kolben oder anderer pneumatischer oder hydraulischer Wandler umgesetzt sein.

Eine Reifenbaumaschine mit dieser Ausgestaltung hat den Vorteil, dass die Kernsetzvorrichtung einerseits in bekannter Art und Weise eine Kernfahne halten, sie an die Karkasstrommel herantransportieren und an einem auf einer Karkasstrommel positionierten Karkassengeweberohling positionieren kann. Hierbei ist die Kernsetzvorrichtung dazu eingerichtet, eine Kernfahne, insbesondere mitsamt einem mit der Kernfahne verbundenen Wulstkern, automatisiert aufzunehmen. Weiterhin ist die Kernsetzvorrichtung dazu eingerichtet, die Kernfahne, insbesondere mitsamt einem mit der Kernfahne verbundenen Wulstkern, konzentrisch mit der Karkasstrommel auszurichten und in diesem ausgerichteten Zustand in axialer Richtung der Karkasstrommel bis an den auf der Karkasstrommel positionierten Karkassengeweberohling heranzuführen. Dabei ist die Kernsetzvorrichtung beispielsweise zum Halten im Bereich des Wulstkerns eingerichtet, insbesondere mittels einer ringförmigen Greifvorrichtung. Hiermit hält und transportiert die Kernsetzvorrichtung somit den ringförmigen Wulstkern, um welchen herum sich die ringförmige und mit dem Wulstkern verbundene Kernfahne erstreckt.

Nachdem die Kernsetzvorrichtung in dem zweiten Positionierschritt des erfindungsgemäßen Verfahrens die Kernfahne mit dem Wulstkern an der Karkasstrommel positioniert und mit dem auf der Karkasstrommel befindlichen Karkassengeweberohling kontaktiert hat, führt die Reifenbaumaschine den Anformschritt durch. Die fluidbetätigte Anformvorrichtung weist beispielsweise die genannten formflexiblen Elemente auf, die für das Anpressen der Kernfahne mit dieser oder mit einem an der Kernfahne angeordneten Wulstverstärkerelement in unmittelbaren Kontakt treten und die Anformkraft auf die Kernfahne ausüben. Hierdurch drückt die Anformvorrichtung die Kernfahne derart auf den auf der Karkasstrommel positionierten Karkassengeweberohling, dass die Kernfahne sich gemäß dem erfindungsgemäßen Verfahren der Trommelkontur anpasst und die Kernfahne mit dem Karkassengeweberohling verbunden, insbesondere verklebt, wird.

In einer Weiterbildung der Erfindung ist vorgesehen, dass die wenigstens eine fluidbetätigbare Anformvorrichtung wenigstens einen druckbeaufschlagbaren und expandierbaren Balg aufweist, dessen Außenwandung bei dem Anformschritt die Kernfahne und/oder ein an dieser angeordnetes Wulstverstärkerelement kontaktiert und die Anformkraft auf die Kernfahne ausübt, insbesondere direkt kontaktierend oder mittelbar über ein etwaig vorhandenes Wulstverstärkerelement zwischen der Kernfahne und der Außenwandung des Balgs. Dies hat den Vorteil, dass die fluidbetätigbare Anformvorrichtung in einfacher und kostengünstiger Weise realisierbar ist. Ein weiterer Vorteil ist, dass ein druckbeaufschlagbarer und expandierbarer Balg sich besonders gut der bei dem Anformen verändernden Kontur der Kernfahne und gegebenenfalls eines an der Kernfahne anliegenden Wulstverstärkerelements anpasst. Ein weiterer Vorteil ist, dass die Formflexibilität eines solchen Balgs innerhalb gewisser Grenzen ein Anpressen und Anformen von Kernfahnen mit unterschiedlicher Geometrie ermöglicht, ohne dass bereits aufgrund geringfügiger Unterschiede in den Geometrien der unterschiedlichen Kernfahnen die Anformvorrichtung angepasst werden muss. Dies macht das Verfahren für verschiedene Reifentypen und Typen von Kernfahnen variabel. An den Innenwandungen des wenigstens einen Balgs liegt hierbei der hydrostatische Fluiddruck des betätigenden Fluids an. Der hydrostatische Fluiddruck wird durch die Wand des Balgs an die Außenwandung des Balgs übertragen und von dort auf die kontaktierte Kernfahne übertragen.

In einer Weiterbildung der Erfindung ist vorgesehen, dass die fluidbetätigbare Anformvorrichtung, insbesondere ein bzw. der expandierbare Balg, bei dem Anformschritt eine erste sich konzentrisch zu der Kernfahne erstreckende Andrückfläche aufweist, insbesondere eine kreisringförmige Andrückfläche. Dies hat den Vorteil, dass die Anformkraft besonders gleichmäßig verteilt auf die ringförmige Kernfahne übertragbar ist bzw. übertragen wird. Bei dem Anformschritt kommt die Andrückfläche auf der dem Karkassengeweberohling abgewandten Seite der Kernfahne und/oder der dem Karkassengeweberohling abgewandten Seite eines Wulstverstärkerelements zu liegen und überträgt hierdurch die Anformkraft auf die Kernfahne. Die Andrückfläche ist somit eine mögliche Variante einer Außenwandung des wenigstens einen Balgs.

Gemäß der Erfindung ist vorgesehen, dass bei dem Anformschritt ein erster druckbeaufschlagbarer und expandierbarer Balg die Kernfahne mit einem ersten Anteil der Anformkraft als Druck in Axialrichtung der Karkasstrommel an den Karkassengeweberohling anformt. Hierzu weist die Anformvorrichtung der Reifenbaumaschine den ersten druckbeaufschlagbaren und expandierbaren Balg auf, welcher zum Ausüben des Drucks in Axialrichtung der Karkasstrommel eingerichtet ist. Bei dem Anformschritt expandiert der erste Balg folglich in axialer Richtung und ist dazu eingerichtet, die Kernfahne in solchen Bereichen an den Karkassengeweberohling auf der Karkasstrommel besonders effektiv anzudrücken, in welchen die Kontaktfläche der Kernfahne auf dem Karkassengeweberohling rechtwinklig oder nahezu rechtwinkelig in Bezug auf die Axialrichtung der Karkasstrommel orientiert ist.

Gemäß der Erfindung ist ein zweiter druckbeaufschlagbarer und expandierbarer Balg vorhanden, der die Kernfahne mit einem zweiten Anteil der Anformkraft als Druck in Radialrichtung der Karkasstrommel an den Karkassengeweberohling anfomt. Hierzu weist die Anformvorrichtung der Reifenbaumaschine den zweiten druckbeaufschlagbaren und expandierbaren Balg auf, welcher zum Ausüben des Drucks in Axialrichtung der Karkasstrommel eingerichtet ist. Bei dem Anformschritt expandiert der zweite Balg folglich in radialer Richtung und ist dazu eingerichtet, die Kernfahne in solchen Bereichen an den Karkassengeweberohling auf der Karkasstrommel besonders effektiv anzudrücken, in welchen die Kontaktfläche der Kernfahne auf dem Karkassengeweberohling parallel oder nahezu parallel in Bezug auf die Axialrichtung der Karkasstrommel orientiert ist.

In einer Weiterbildung der Erfindung ist ein dritter druckbeaufschlagbarer und expandierbarer Balg vorhanden, der die Kernfahne mit einem dritten Anteil der Anformkraft als Druck in Axialrichtung und in Radialrichtung der Karkasstrommel an den Karkassengeweberohling anformt. Hierzu weist die Anformvorrichtung der Reifenbaumaschine den dritten druckbeaufschlagbaren und expandierbaren Balg auf, welcher zum Ausüben des Drucks in Axialrichtung und in Radialrichtung der Karkasstrommel eingerichtet ist. Bei dem Anformschritt expandiert der dritte Balg folglich in einer überlagerten Richtung aus axialer Richtung und radialer Richtung der Karkasstrommel und ist dazu eingerichtet, die Kernfahne in solchen Bereichen an den Karkassengeweberohling auf der Karkasstrommel besonders effektiv anzudrücken, in welchen die Kontaktfläche der Kernfahne auf dem Karkassengeweberohling schräg sowohl in Bezug auf die axiale Richtung, als auch in Bezug auf die radiale Richtung der Karkasstrommel orientiert ist.

In einer Weiterbildung des erfindungsgemäßen Verfahrens ist vorgesehen, dass bei dem zweiten Positionierschritt eine oder die vorgenannte Kernsetzvorrichtung einer Reifenbaumaschine das Positionieren der Kernfahne durchführt, wobei die Kernsetzvorrichtung die Kernfahne hält und in Axialrichtung der Karkasstrommel an den Karkassengeweberohling heranführt, bis in einer Berührungsposition der Kernsetzvorrichtung die Kernfahne und der Karkassengeweberohling einander berühren. In Fällen, in denen an der Kernfahne ein Wulstverstärkerelement auf der der Karkasstrommel zugewandten Seite angeordnet ist, insbesondere ein Abschnitt eines Flippers, kann dabei ebenso dieses Wulstverstärkerelement in der Berührposition den Karkassengeweberohling berühren. Bei dem Anformschritt wird die Anformkraft sodann von der Kernsetzvorrichtung auf die Kernfahne ausgeübt. In diesem Sinne bewerkstelligt die Kernsetzvorrichtung sowohl das Positionieren der Kernfahne des zweiten Positionierschritts, als auch das Anpressen und Anformen des Anformschritts. Dass die Reifenbaumaschine zur Durchführung dieser genannten Schritte eingerichtet ist, hat den Vorteil, dass der Anformschritt nahezu oder vollständig zykluszeitneutral in ein bisher ohne einen solchen Anformschritt durchgeführtes Verfahren integrierbar ist. Somit sind bereits bestehende Verfahrensführungen ohne oder mit nur geringfügiger Beeinträchtigung der Verfahrenslogistik um den erfindungsgemäßen Anformschritt ergänzbar. Bezüglich der Reifenbaumaschine hat dies den entsprechenden Vorteil, dass lediglich die Kernsetzvorrichtung um eine Anformvorrichtung zu ergänzen ist. Um eine solche Anformvorrichtung ergänzt ist mit einer Reifenbaumaschine der eingangs genannten Art unmittelbar nach dem Positionieren der Kernfahne an dem Karkassengeweberohling gemäß dem zweiten Positionierschritt der erfindungsgemäße Anformschritt durchführbar. Somit sind auch bestehende Produktionsanlagen auf einfache und kostengünstige Weise erfindungsgemäß ergänzbar.

Gemäß einer Weiterbildung der Erfindung ist bei dem Anformschritt die Kernsetzvorrichtung in der Berührungsposition angeordnet. Dies hat den Vorteil, dass die Kernsetzvorrichtung für den Anformschritt keine ergänzenden Verfahrbewegungen ausführt. Insbesondere ist der Anformschritt praktisch zykluszeitneutral in bestehende Verfahren, die ursprünglich ohne den Anformschritt ausgestaltet waren, integrierbar. Ein weiterer Vorteil ist, dass in der Berührungsposition die Kernfahne mittels der Kernsetzvorrichtung gegen Verrutschen relativ zu dem Karkassengeweberohling während des Anformschritt effektiv gesichert bleibt. Hierdurch wird die Prozesssicherheit gesteigert.

Gemäß einer Weiterbildung der Erfindung weist die Kernsetzvorrichtung einen Magnetkranz auf, mit dem sie bei dem zweiten Positionierschritt die Kernfahne hält, insbesondere durch magnetisches Anziehen eines mit der Kernfahne verbundenen Wulstkerns. Der Magnetkranz dient als Greifvorrichtung zum Halten und Positionieren des Wulstkerns und einer mit dem Wulstkern verbundenen Kernfahne sowie gegebenenfalls eines mit der Kernfahne und/oder dem Wulstkern verbundenen Wulstverstärkerelements. Bei dem erfindungsgemäßen Verfahren hat dies den Vorteil, dass nach dem Anformschritt ein axiales Zurücksetzen der Kernsetzvorrichtung von der Karkasstrommel derart durchgeführt wird, dass dabei der Balg oder die Bälge den Wulstkern gegen die Magnetkraft abwerfen. Insofern können der Balg bzw. die Bälge als Auswerfvorrichtung für den Wulstkern gegen die Magnetkraft wirken.

Weitere Ausgestaltungen der Erfindung finden sich in den Unteransprüchen sowie in dem nachfolgenden Ausführungsbeispiel, mit dem eine mögliche Variante der Erfindung näher erläutert wird. Als Zeichnungen zeigen
- Fig. 1:: eine Kernsetzvorrichtung in einer ersten Position vor einer Karkasstrommel in Querschnittsansicht,
- Fig. 2:: die Kernsetzvorrichtung in einer Berührungsposition vor der Karkasstrommel in Querschnittsansicht vor einem Anformschritt;
- Fig. 3:: die Kernsetzvorrichtung und Karkastrommel gemäß Fig. 2 nach einem Anformschritt.

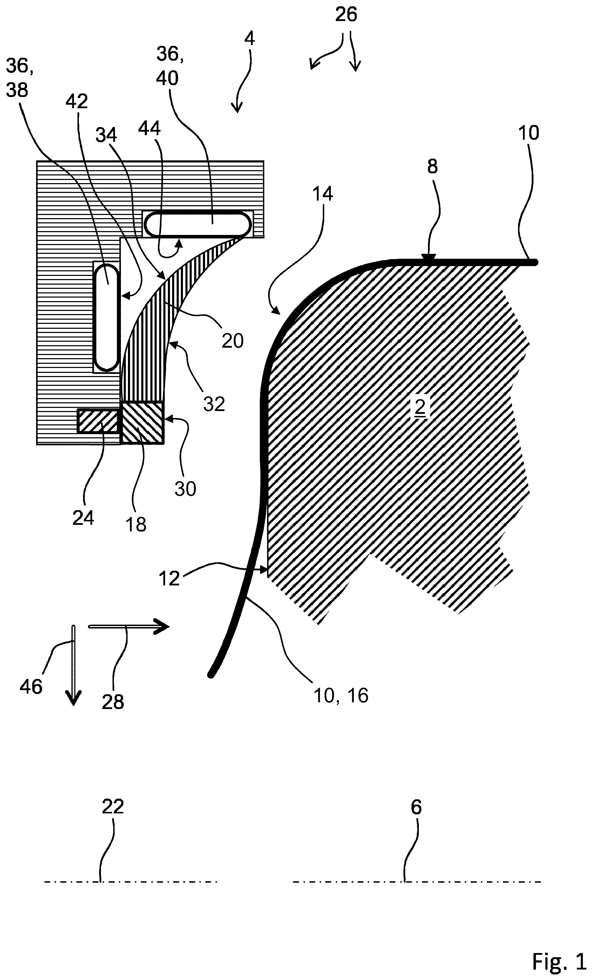

Figur 1 zeigt eine Querschnittsansicht eines (entlang der gezackten Linie herausgebrochen dargestellten) Teils einer Karkasstrommel 2 und einer Kernsetzvorrichtung 4. Die Karkasstrommel 2 erstreckt sich rotationssymmetrisch um ihre Trommelachse 6. Die Karkasstrommel 2 weist eine Mantelfläche 8 auf, auf der die Karkasstrommel 2 mit einem Karkassengeweberohling 10 bespannt ist. Der Karkassengeweberohling 10 ist einteilig oder mehrteilig mit einer oder mehreren Lagen vollständig umlaufend auf der Mantelfläche 8 angeordnet. Die Karkasstrommel 2 mit dem Karkassengeweberohling 10 gemäß dieser Darstellung ergibt sich als Ergebnis eines ersten erfindungsgemäßen Positionierschritts, bei dem der Karkassengeweberohling 10 an der Karkasstrommel 2 positioniert wurde. Die Karkasstrommel 2 weist eine Trommelkontur 8, 12, 14 auf, die die Mantelfläche 8, eine Axialfläche 12 sowie eine Trommelschulter 14 der Karkasstrommel 2 umfasst. Der Karkassengeweberohling 10 erstreckt sich seitlich von der Mantelfläche 8 über die Trommelschulter 14 bis an die Axialfläche 12. An der Axialfläche endet der Karkassengeweberohling 10 mit einem Umschlagsabschnitt 16. Auch im Bereich der Trommelschulter 14 und der Axialfläche 12 erstreckt sich der Karkassengeweberohling 10 rotationssymmetrisch um die Trommelachse 6.

In dieser Darstellung gemäß Figur 1 ist die Karkasstrommel 2 mit dem Karkassengeweberohling 10 dazu vorbereitet, dass ein Wulstkern 18 mit einer an diesem befestigten Kernfahne 20 im Bereich der Trommelschulter 14 an dem Karkassengeweberohling 10 positioniert und an diesen angepresst wird.

Das Positionieren der Kernfahne 20 erfolgt bei dem Verfahren gemeinsam mit dem Wulstkern 18 in einem zweiten Positionierschritt, der auf den ersten Positionierschritt folgt. Der zweite Positionierschritt des Verfahrens wird mittels der Kernsetzvorrichtung 4 durchgeführt. Die Kernsetzvorrichtung 4 ist rotationssymmetrisch um ihre Achse 22 ausgebildet. Bei dem zweiten Positionierschritt hält die Kernsetzvorrichtung 4 die Kernfahne 20 zusammen mit dem Wulstkern 18. Das Halten der Kernfahne 20 mit dem Wulstkern 18 bewerkstelligt die Kernsetzvorrichtung 4 mittels einer Greifvorrichtung 24 in Form eines Magnetkranzes 24. Das unmittelbare Greifen erfolgt dabei durch die magnetische Wechselwirkung des Magnetkranzes des 24 mit dem Metall aufweisenden Wulstkern 18. Bei dem Positionieren gemäß dem zweiten Positionierschritt bewegt die dabei ihrerseits bewegte Kernsetzvorrichtung 4 den Wulstkern 18 mit der Kernfahne 20 an die Karkasstrommel 2 heran. Das Bewegen der Kernsetzvorrichtung 4 an die Karkasstrommel 2 heran erfolgt bei einer solchen Reifenbaumaschine 26, die die Karkasstrommel 2 und die Kernsetzvorrichtung 4 aufweist, beispielsweise automatisiert mittels Aktoren. Dieses Positionieren der Kernfahne 20 und des Wulstkern 18 an dem Karkassengeweberohling 10 erfolgt durch eine Axialbewegung der Kernsetzvorrichtung 4 in Richtung ihrer Achse 22 und in Axialrichtung 28 der Trommelachse 6. Bei dem Positionieren des zweiten Positionierschritts sind die Trommelachse 6 und die Achse 22 der Kernsetzvorrichtung fluchtend zueinander orientiert, sodass die Kernsetzvorrichtung 4 und die Karkasstrommel 2 konzentrisch zueinander angeordnet sind. Bei dem Positionierschritt sind die Kontaktierfläche 30 des Wulstkerns 18 und die Kontaktierfläche 32 der Kernfahne 20 mit einem Klebstoff beschichtet, mittels welchem der Wulstkern 18 und die Kernfahne 20 nach dem zweiten Positionierschritt an dem Karkassengeweberohling 10 anhaften.

Bei dem zweiten Positionierschritt verfährt die Kernsetzvorrichtung 4 ausgehend von der in Figur 1 dargestellten Anordnung in Axialrichtung 28 bis an die Karkasstrommel 2 heran, so dass in einer Berührungsposition der Wulstkern 18 mit seiner Kontaktierfläche 30 im Bereich der Trommelschulter 14 und/oder der Axialfläche 20 auf dem Karkassengeweberohling 10 zu liegen kommt. Je nach Ausformung der Kernfahne 20 kann in dieser Berührungsposition auch bereits ein Teil der Kontaktierfläche 32 der Kernfahne 20 auf dem Karkassengeweberohling 10 zu liegen kommen. In der Berührungsposition hält die Kernsetzvorrichtung 4 die Kontaktierfläche 30 des Wulstkerns 18 und gegebenenfalls einen Teil der Kontaktierfläche 32 der Kernfahne 20 mittels einer in Axialrichtung 28 wirkenden Positionierkraft fixiert. Hierdurch wird ein Verrutschen des Wulstkerns 18 und der Kernfahne 20 in Bezug auf den Karkassengeweberohling 10 verhindert.

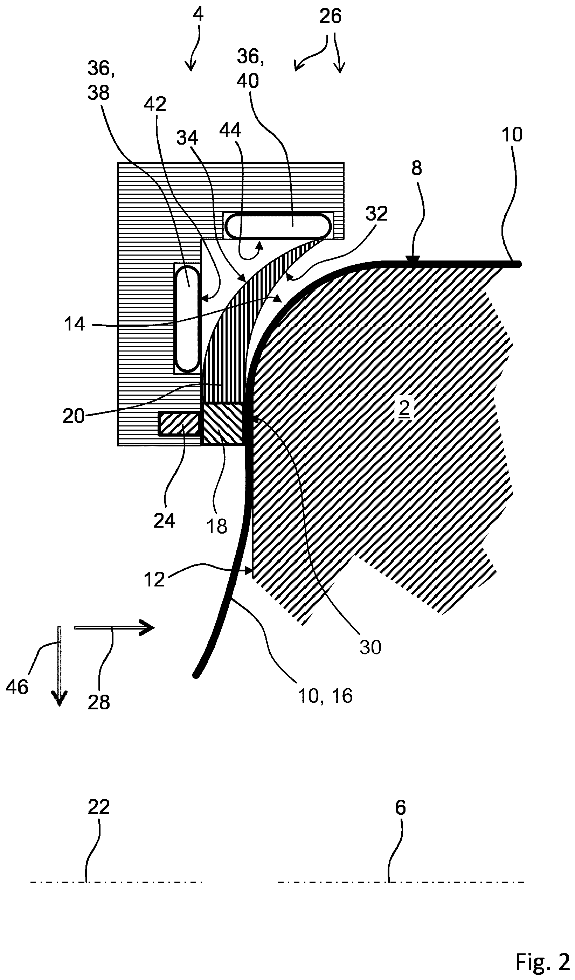

Figur 2 zeigt die Karkasstrommel und die in der Berührungsposition befindliche Kernsetzvorrichtung 4, wie sie nach Vollendung des zweiten Positionierschritts angeordnet sind. Hierbei ist ein Teil der Kontaktierfläche 32 der Kernfahne 20 oder die gesamte Kontaktierfläche 32 der Kernfahne 20 noch beabstandet zu dem Karkassengeweberohling 10 im Bereich der Trommelschulter 14 angeordnet. Nach dem zweiten Positionierschritt wird erfindungsgemäß ein Anformschritt durchgeführt, bei dem die Kernfahne 20 mittels einer Anformkraft an den Karkassenrohling 10 angepresst und dadurch an die Trommelkontur 8, 12, 14, insbesondere im Bereich der Trommelschulter 14, angeformt wird. Dies erfolgt unter Beibehalten der Berührungsposition der Kernsetzvorrichtung 4. Das Anformen der Kernfahne 20 an die Trommelkontur 8, 12, 14 umfasst ein Umformen der Kernfahne 20 derart, dass die Kontur der Kontaktierfläche 32 der Kernfahne 20 an die Trommelkontur 8, 12, 14 angeglichen wird. Dies geschieht durch das Anpressen der Kontaktierfläche 32 der Kernfahne 20 an den Karkassengeweberohling 10, welcher seinerseits der Trommelkontur 8, 12, 14 folgt. Bei dem Anformschritt ist der Umschlagsabschnitts 16 noch nicht mittels eines Lagenumschlagsschritts um den Wulstkern 18 und die Kernfahne 20 herum umgeschlagen. Vielmehr erfolgt das Anpressen und dadurch das Anformen der Kernfahne bei dem Anformschritt durch direkte Einwirkung der dazu aufgebrachten Anformkraft auf die Fläche 34 an derjenigen Seite der Kernfahne 20, die dem Karkassengeweberohling 10 abgewandt orientiert ist.

Die Kernsetzvorrichtung 4 der Reifenbaumaschine 26 weist für das Aufbringen der Anformkraft eine fluidbetätigbare Anformvorrichtung 36 auf. Die Anformvorrichtung 36 weist einen ersten expandierbaren Balg 38 auf, welcher von innen mit einem Fluid befüllbar und hierdurch mit einem Druck beaufschlagbar ist. Das Fluid kann beispielsweise Luft, Wasser, Öl oder ein anderes Fluid sein. Weiterhin weist die Anformvorrichtung 36 einen zweiten expandierbaren Balg 40 auf, welcher von innen mit einem Fluid befüllbar und hierdurch mit einem Druck beaufschlagbar ist. Die Anformvorrichtung 36 umfasst weiterhin wenigstens einen (nicht dargestellten) Druckerzeuger, welcher das jeweilige Fluid in den ersten Balg 38 und/oder in den zweiten Balg 40 fördern und dabei den in dem jeweiligen Balg 38, 40 wirkenden Druck herstellen kann.

Bei dem Anformschritt werden der erste Balg 38 und der zweite Balg 40 mit Fluid befüllt und hierdurch jeweils ein Druck erzeugt. Hierbei expandieren der erste Balg 38 und der zweite Balg 40 und pressen hierdurch die Kernfahne 20 ausgehend von der Kernsetzvorrichtung 4 mit einer Anformkraft gegen den auf der Karkasstrommel 2 angeordneten Karkassengeweberohling 10. Durch das Anpressen wird die Kernfahne 20, insbesondere entlang ihrer radialen Erstreckung, einer Biegeumformung unterzogen, sodass die Kernfahne 20 an die Trommelkontur 8, 12, 14 angeformt wird. Im Ergebnis des Anformschritts kommt die Kernfahne 20 gleichmäßig auf dem Karkassengeweberohling 10 zu liegen, wobei durch das Anpressen und Anformen mittels des ersten Balgs 38 und des zweiten Balgs 40 eine besonders zuverlässige Verklebung zwischen der Kernfahne 20 und dem Karkassengeweberohling 10 bei gleichzeitiger Anpassung der Kernfahne 20 an die Trommelkontur 8, 12, 14 erreicht wird.

Der erste Balg 38 und der zweite Balg 40 erstrecken sich hierbei rotationssymmetrisch um die Achse 22 der Kernsetzvorrichtung 4. Der ersten Balg 38 weist als eine Außenwandung eine erste Andrückfläche 42 auf. Die erste Andrückfläche 42 erstreckt sich bei dem Anformschritt somit ebenfalls konzentrisch zu der Kernsetzvorrichtung 4 und zu der Kernfahne 20. Die erste Andrückfläche 42 ist bei dem Anformschritt vor dem Expandieren kreisringförmig und ist in Axialrichtung 28 zu der Kernfahne 20 und auf die Karkasstrommel 2 hin gerichtet. Bei dem Expandieren des ersten Balgs 38 übt dieser mittels der ersten sich dabei verformenden Andrückfläche 42 einen ersten Anteil der Anformkraft als Druck in Axialrichtung 28 auf die Kernfahne 20 aus.

Der zweite Balg 40 weist als eine Außenwandung eine zweite Andrückfläche 44 auf. Die zweite Andrückfläche 44 erstreckt sich bei dem Anformschritt ebenfalls konzentrisch zu der Kernsetzvorrichtung 4 und zu der Kernfahne 20. Die zweite Andrückfläche 44 hat bei dem Anformschritt vor dem Expandieren die Form einer zylindrischen Wandung und ist in Radialrichtung 46 nach innen zu der Kernfahne 20 und auf die Karkasstrommel 2 hin gerichtet. Bei dem Expandieren des zweiten Balgs 38 übt dieser mittels der zweiten sich dabei verformenden Andrückfläche 44 einen zweiten Anteil der Anformkraft als Druck in Radialrichtung 46 auf die Kernfahne 20 aus.

Bei dem Expandieren der Bälge in dem Anformschritt formen sich die erste Andrückfläche 42 und die zweite Andrückfläche 44 an die dem Karkassengeweberohling 10 abgewandte Fläche 34 der Kernfahne 20 an und bewirken so eine gleichmäßige Flächenerpressung zwischen der Kontaktierfläche 32 der Kernfahne 20 und dem Karkassengeweberohling 10.

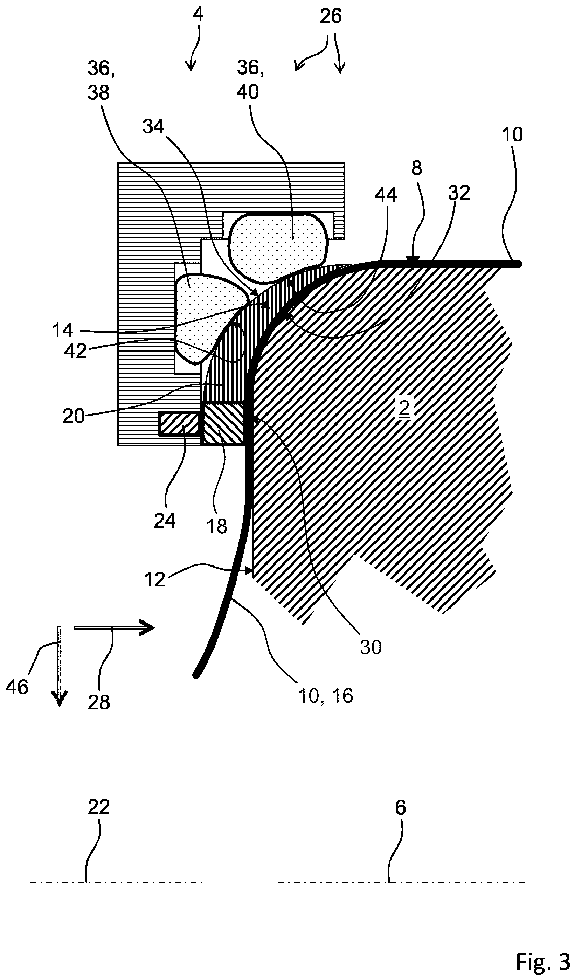

Dieser Zustand der expandierten und an die Kernfahne 20 angeformten Bälge 38, 40 am Ende des Anformschritts ist in Figur 3 gezeigt. Mit der vollständig und flächig an den Karkassengeweberohling 10 angepressten Kernfahne 20 sind der Karkassengeweberohling 10, der Wulstkern 18 und die Kernfahne 20 für einen anschließenden Lagenumschlagsschritt vorbereitet. Für das Durchführen des Lagenumschlagssschritt wird die Kernsetzvorrichtung 2 in entgegengesetzter Axialrichtung 28 von der Karkasstrommel 2 zurückgefahren. Hierbei verbleiben der angeklebte Wulstkern 18 und die angeklebte Kernfahne 20 an dem Karkassengeweberohling 10, welcher seinerseits der Trommelkontur 8, 12, 14 folgt. Dass der Wulstkern 18 und die Kernfahne 20 entgegen der Magnetkraft von der Kernsetzvorrichtung 4 gelöst werden, ist durch weiteres Expandieren der Bälge 38, 40 während des Zurückfahrens der Kernsetzvorrichtung 4 unterstützbar. Insofern haben die Bälge 38, 40 zugleich die Funktion einer Abwerfvorrichtung.

Anschließend wird bei dem auf den Anformschritt folgenden Lagenumschlagssschritt der Umschlagsabschnitts 16 des Karkassengeweberohlings 10 um den Wulstkern 18 und die Kernfahne 20 herum gelegt und mittels Andrücken zu einem Lagenumschlag verklebt. Somit kommt der Umschlagsabschnitt 16 am Ende des Lagenumschlagsschritts auf der der Karkasstrommel 2 abgewandten Fläche 34 der Kernfahne 20 zu liegen.

Der Karkassengeweberohling 10 mit dem so geschaffenen Lagenumschlag ist nun für die weitere Formgebung der Reifenkarkasse und für weitere Bearbeitungsschritte für die Fertigstellung eines Luftreifens verarbeitbar. Dies kann beispielsweise das Aufbringen beispielsweise einer luftdichten Innenschicht, das Ansetzen von Seitenwandkomponenten, das Aufbringen von Stahlgürteln und das Aufbringen einer Lauffläche umfassen.

Die vorstehende Lehre ist dargestellt betreffend ein Verfahren zur Herstellung einer (einzigen) Reifenwulst dargestellt. Üblicherweise umfasst die Herstellung eines Luftreifens für den Fachmann selbstverständlich eine zeitgleiche (nicht konkret beschriebene) Durchführung des Verfahrens in zweifacher Ausführung. Hierzu weist die Karkasstrommel 2 zusätzlich zu der genannten und dargestellten ersten Trommelkontur 8, 12, 14 an dem dargestellten ersten axialen Ende der Karkasstrommel 2 ebenso an einem zweiten axialen Ende eine weitere Trommelkontur auf, an welcher mittels einer zweite Kernsetzvorrichtung das erfindungsgemäße Verfahren entsprechend durchgeführt wird.

### Bezugszeichenliste

- 2: Karkasstrommel
- 4: Kernsetzvorrichtung
- 6: Trommelachse
- 8: Mantelfläche
- 10: Karkassengeweberohling
- 12: Axialfläche
- 14: Trommelschulter
- 16: Umschlagsabschnitt
- 18: Wulstkern
- 20: Kernfahne
- 22: Achse
- 24: Magnetkranz
- 26: Reifenbaumaschine
- 28: Axialrichtung
- 30: Kontaktierfläche
- 32: Kontaktierfläche
- 34: Fläche
- 36: Anformvorrichtung
- 38: erster Balg
- 40: zweiter Balg
- 42: erste Andrückfläche
- 44: zweite Andrückfläche
- 46: Radialrichtung

## Patentansprüche

1. Verfahren zur Herstellung eines Luftreifens mit einer Reifenkarkasse und wenigstens einer eine Kernfahne aufweisenden Reifenwulst, umfassend folgende Verfahrensschritte:
- einen ersten Positionierschritt, umfassend ein Positionieren eines Karkassengeweberohlings (10) an einer eine Trommelkontur (8, 12, 14) aufweisenden Karkasstrommel (2),
- einen auf den ersten Positionierschritt folgenden zweiten Positionierschritt, umfassend ein Positionieren der Kernfahne (20) an dem Karkassengeweberohling (2),
- einen auf den zweiten Positionierschritt folgenden Lagenumschlagsschritt, umfassend ein Umschlagen eines Umschlagsabschnitts (16) des Karkassengeweberohlings (10) um die Kernfahne (20) herum, wobei nach dem zweiten Positionierschritt und vor dem Lagenumschlagssschritt ein Anformschritt durchgeführt wird, bei dem die Kernfahne (20) mittels einer Anformkraft von wenigstens einer fluidbetätigbaren Anformvorichtung (36, 38, 40) auf den an der Karkasstrommel (2) positionierten Karkassengeweberohling (10) angepresst und dadurch an die Trommelkontur (8, 12, 14) angeformt wird,
**dadurch gekennzeichnet, dass**
die fluidbetätigbare Anformvorrichtung (36, 38, 40) einen ersten druckbeaufschlagbaren und expandierbaren Balg (3) aufweist, der beim Anformschritt die Kernfahne (20) mit einem ersten Anteil der Anformkraft als Druck in Axialrichtung (28) der Karkasstrommel (2) an den Karkassengeweberohling (10) anformt, und
einen zweiten druckbeaufschlagbaren und expandierbaren Balg (40) aufweist, der beim Anformschritt die Kernfahne (20) mit einem zweiten Anteil der Anformkraft als Druck in Radialrichtung (46) der Karkasstrommel (2) an den Karkassengeweberohling (10) anfomt.

2. Verfahren nach Anspruch 1, **dadurch gekennzeichnet, dass** die wenigstens eine fluidbetätigbare Anformvorrichtung (36, 38, 40) wenigstens einen druckbeaufschlagbaren und expandierbaren Balg (38, 40) aufweist, dessen Außenwandung (42, 44) bei dem Anformschritt die Kernfahne (20) und/oder ein an dieser angeordnetes Wulstverstärkerelement kontaktiert und die Anformkraft auf die Kernfahne (20) ausübt.

3. Verfahren nach einem der vorhergehenden Ansprüche, **dadurch gekennzeichnet, dass** die fluidbetätigbare Anformvorrichtung (36, 38), insbesondere ein bzw. der expandierbare Balg (38), bei dem Anformschritt eine erste sich konzentrisch zu der Kernfahne erstreckende Andrückfläche (42) aufweist, insbesondere eine kreisringförmige Andrückfläche (42).

4. Verfahren nach einem der vorhergehenden Ansprüche, **dadurch gekennzeichnet, dass** bei dem Anformschritt ein dritter druckbeaufschlagbarer und expandierbarer Balg die Kernfahne (20) mit einem dritten Anteil der Anformkraft als Druck in Axialrichtung (28) und in Radialrichtung (46) der Karkasstrommel (2) an den Karkassengeweberohling (10) anformt.

5. Verfahren nach einem der vorhergehenden Ansprüche, **dadurch gekennzeichnet, dass**
- bei dem zweiten Positionierschritt eine Kernsetzvorrichtung (4) einer Reifenbaumaschine (2, 4, 26) das Positionieren der Kernfahne (20) durchführt, wobei die Kernsetzvorrichtung (4) die Kernfahne hält und in Axialrichtung (28) der Karkasstrommel (2) an den Karkassengeweberohling (10) heranführt, bis in einer Berührungsposition der Kernsetzvorrichtung (2) die Kernfahne (20) und der Karkassengeweberohling (10) einander berühren und/oder ein an der Kernfahne (20) angeordnetes Wulstverstärkerelement und der Karkassengeweberohling (10) einander berühren, und dass
- bei dem Anformschritt die Anformkraft von der Kernsetzvorrichtung (4) auf die Kernfahne (20) ausgeübt wird.

6. Verfahren nach Anspruch 5, **dadurch gekennzeichnet, dass** bei dem Anformschritt die Kernsetzvorrichtung (4) in der Berührungsposition angeordnet ist.

7. Verfahren nach einem der Ansprüche 5 oder 6, **dadurch gekennzeichnet, dass** die Kernsetzvorrichtung (4) einen Magnetkranz (24) aufweist, mit dem sie bei dem zweiten Positionierschritt die Kernfahne (20) hält, insbesondere durch magnetisches Anziehen eines mit der Kernfahne (20) verbundenen Wulstkerns (18).

8. Reifenbaumaschine zur Durchführung des Verfahrens zur Herstellung eines Luftreifens nach einem der vorhergehenden Ansprüche, aufweisend eine Karkasstrommel (2) und eine von der Karkasstrommel (2) separat ausgeführte Kernsetzvorrichtung (4), wobei die Kernsetzvorrichtung (4) zum Halten einer Kernfahne (20) unabhängig von der Karkasstrommel (2) und zum Heranführen der Kernfahne (20) an die Karkasstrommel (20) in deren axialer Richtung (28) eingerichtet ist, wobei die Kernsetzvorrichtung (2) wenigstens eine fluidbetätigte Anformvorrichtung (36, 38, 40) aufweist, mittels welcher von der Kernsetzvorrichtung (4) eine Anformkraft auf eine zwischen der Karkasstrommel (2) und der Kernsetzvorrichtung (4) anordenbare Kernfahne (20) ausübbar ist, **dadurch gekennzeichnet, dass** die fluidbetätigbare Anformvorrichtung (36, 38, 40) einen ersten druckbeaufschlagbaren und expandierbaren Balg (38,) aufweist, welcher zum Ausüben eines Drucks in Axialrichtung (28) der Karkasstrommel (2) eingerichtet ist und einen zweiten druckbeaufschlagbaren und expandierbaren Balg (40) aufweist, welcher zum Ausüben eines Drucks in Radialrichtung (46) der Karkasstrommel (2) eingerichtet ist.

9. Reifenbaumaschine nach Anspruch 8, **dadurch gekennzeichnet, dass** die wenigstens eine fluidbetätigbare Anformvorrichtung (36, 38, 40) wenigstens einen druckbeaufschlagbaren und expandierbaren Balg (38, 40) aufweist, dessen Außenwandung (42, 44) zum Ausüben der Anformkraft auf die zwischen der Karkasstrommel (2) und der Kernsetzvorrichtung (4) anordenbare Kernfahne (20) eingerichtet ist.

10. Reifenbaumaschine nach Anspruch 9, **dadurch gekennzeichnet, dass** die Anformvorrichtung (36, 38, 40) einen dritten druckbeaufschlagbaren und expandierbaren Balg aufweist, welcher zum Ausüben eines Drucks in Axialrichtung (28) und in Radialrichtung (46) der Karkasstrommel (2) eingerichtet ist.

11. Reifenbaumaschine nach einem der Ansprüche 8 bis 10, **dadurch gekennzeichnet, dass** die Kernsetzvorrichtung (4) einen Magnetkranz (24) aufweist, welcher zum Halten einer Kernfahne (20) eingerichtet ist, insbesondere durch magnetisches Anziehen eines mit der Kernfahne (20) verbundenen Wulstkerns (18).

## Claims

1. Method for producing a pneumatic tyre with a tyre carcass and at least one tyre bead having a flipper strip, comprising the following method steps:
- a first positioning step, comprising positioning a carcass fabric blank (10) on a carcass drum (2) having a drum contour (8, 12, 14),
- a second positioning step, following the first positioning step and comprising positioning the flipper strip (20) on the carcass fabric blank (2),
- a ply turning-up step, following the second positioning step and comprising turning up a turn-up portion (16) of the carcass fabric blank (10) around the flipper strip (20), wherein, after the second positioning step and before the ply turning-up step, a forming step is carried out, in which the flipper strip (20) is pressed by means of a forming force of at least one fluidically actuable forming device (36, 38, 40) against the carcass fabric blank (10) positioned on the carcass drum (2), and is thereby formed to the shape of the drum contour (8, 12, 14), **characterized in that** the fluidically actuable forming device (36, 38, 40) has a first pressurizable and expandable bladder (3), which in the forming step forms the flipper strip (20) onto the carcass fabric blank (10) with a first component of the forming force as pressure in the axial direction (28) of the carcass drum (2), and has a second pressurizable and expandable bladder (40), which in the forming step forms the flipper strip (20) onto the carcass fabric blank (10) with a second component of the forming force as pressure in the radial direction (46) of the carcass drum (2).

2. Method according to Claim 1, **characterized in that** the at least one fluidically actuable forming device (36, 38, 40) has at least one pressurizable and expandable bladder (38, 40), the outer wall (42, 44) of which in the forming step contacts the flipper strip (20) and/or a bead reinforcement element arranged thereon and exerts the forming force on the flipper strip (20).

3. Method according to one of the preceding claims, **characterized in that** the fluidically actuable forming device (36, 38), in particular a or the expandable bladder (38), has in the forming step a first pressing area (42), extending concentrically in relation to the flipper strip, in particular an annular pressing area (42).

4. Method according to one of the preceding claims, **characterized in that** in the forming step a third pressurizable and expandable bladder forms the flipper strip (20) onto the carcass fabric blank (10) with a third component of the forming force as pressure in the axial direction (28) and in the radial direction (46) of the carcass drum (2).

5. Method according to one of the preceding claims, **characterized in that**
- in the second positioning step a core setting device (4) of a tyre building machine (2, 4, 26) carries out the positioning of the flipper strip (20), wherein the core setting device (4) holds the flipper strip and brings it up to the carcass fabric blank (10) in the axial direction (28) of the carcass drum (2), until the flipper strip (20) and the carcass fabric blank (10) contact one another and/or a bead reinforcement element arranged on the flipper strip (20) and the carcass fabric blank (10) contact one another in a contact position of the core setting device (2), and **in that**
- in the forming step the forming force is exerted by the core setting device (4) on the flipper strip (20).

6. Method according to Claim 5, **characterized in that** in the forming step the core setting device (4) is arranged in the contact position.

7. Method according to one of Claims 5 or 6, **characterized in that** the core setting device (4) has a magnetic ring (24), with which it holds the flipper strip (20) in the second positioning step, in particular by magnetically attracting a bead core (18) connected to the flipper strip (20).

8. Tyre building machine for carrying out the method for producing a pneumatic tyre according to one of the preceding claims, having a carcass drum (2) and a core setting device (4), formed separately from the carcass drum (2), wherein the core setting device (4) is designed for holding a flipper strip (20) independently of the carcass drum (2) and for bringing the flipper strip (20) up to the carcass drum (20) in the axial direction (28) thereof, wherein the core setting device (2) has at least one fluidically actuated forming device (36, 38, 40), by means of which a forming force can be exerted by the core setting device (4) on a flipper strip (20) that can be arranged between the carcass drum (2) and the core setting device (4), **characterized in that** the fluidically actuable forming device (36, 38, 40) has a first pressurizable and expandable bladder (38), which is designed for exerting a pressure in the axial direction (28) of the carcass drum (2), and a second pressurizable and expandable bladder (40), which is designed for exerting a pressure in the radial direction (46) of the carcass drum (2).

9. Tyre building machine according to Claim 8, **characterized in that** the at least one fluidically actuable forming device (36, 38, 40) has at least one pressurizable and expandable bladder (38, 40), the outer wall (42, 44) of which is designed for exerting the forming force on the flipper strip (20) that can be arranged between the carcass drum (2) and the core setting device (4).

10. Tyre building machine according to Claim 9, **characterized in that** the forming device (36, 38, 40) has a third pressurizable and expandable bladder, which is designed for exerting a pressure in the axial direction (28) and in the radial direction (46) of the carcass drum (2).

11. Tyre building machine according to one of Claims 8 to 10, **characterized in that** the core setting device (4) has a magnetic ring (24), which is designed for holding a flipper strip (20), in particular by magnetically attracting a bead core (18) connected to the flipper strip (20).

## Revendications

1. Procédé de fabrication d'un pneu à air avec une carcasse de pneu et au moins un talon de pneu présentant un pied de tringle, comprenant les étapes de procédé suivantes :
- une première étape de positionnement, comprenant un positionnement d'une ébauche de tissu de carcasse (10) sur un tambour de carcasse (2) présentant un contour de tambour (8, 12, 14),
- une deuxième étape de positionnement suivant la première étape de positionnement, comprenant un positionnement du pied de tringle (20) sur l'ébauche de tissu de carcasse (2),
- une étape de retournement de couche suivant la deuxième étape de positionnement, comprenant un retournement d'une section de retournement (16) de l'ébauche de tissu de carcasse (10) autour du pied de tringle (20), une étape de formage étant effectuée après la deuxième étape de positionnement et avant l'étape de retournement de couche, au cours de laquelle le pied de tringle (20) est pressé sur l'ébauche de tissu de carcasse (10) positionnée sur le tambour de carcasse (2) au moyen d'une force de formage d'au moins un dispositif de formage (36, 38, 40) actionnable par fluide et est ainsi formée sur le contour de tambour (8, 12, 14), **caractérisé en ce que** le dispositif de formage (36, 38, 40) actionnable par fluide présente un premier soufflet pressurisable et expansible(3) qui, lors de l'étape de formage, forme le pied de tringle (20) avec une première partie de la force de formage sous forme de pression dans la direction axiale (28) du tambour de carcasse (2) sur l'ébauche de tissu de carcasse (10), et un deuxième soufflet (40) pressurisable et expansible, qui, lors de l'étape de formage, forme le pied de tringle (20) sur l'ébauche de tissu de carcasse (10) avec une deuxième partie de la force de formage sous forme de pression dans la direction radiale (46) du tambour de carcasse (2).

2. Procédé selon la revendication 1, **caractérisé en ce que** l'au moins un dispositif de formage (36, 38, 40) actionnable par fluide présente au moins un soufflet pressurisable et expansible (38, 40), dont la paroi extérieure (42, 44) entre en contact avec le pied de tringle (20) et/ou un élément de renforcement de talon agencé sur celui-ci lors de l'étape de formage et exerce la force de formage sur le pied de tringle (20).

3. Procédé selon l'une quelconque des revendications précédentes, **caractérisé en ce que** le dispositif de formage (36, 38) actionnable par fluide, notamment un ou le soufflet expansible (38), présente, lors de l'étape de formage, une première surface de pression (42) s'étendant concentriquement au pied de tringle, notamment une surface de pression annulaire (42).

4. Procédé selon l'une quelconque des revendications précédentes, **caractérisé en ce que**, lors de l'étape de formage, un troisième soufflet pressurisable et expansible forme le pied de tringle (20) sur l'ébauche de tissu de carcasse (10) avec une troisième partie de la force de formage en tant que pression dans la direction axiale (28) et dans la direction radiale (46) du tambour de carcasse (2).

5. Procédé selon l'une quelconque des revendications précédentes, **caractérisé en ce que**
- dans la deuxième étape de positionnement, un dispositif de pose de tringle (4) d'une machine de fabrication de pneus (2, 4, 26) effectue le positionnement du pied de tringle (20), le dispositif de pose de tringle (4) maintenant le pied de tringle et l'approchant de l'ébauche de tissu de carcasse (10) dans la direction axiale (28) du tambour de carcasse (2), jusqu'à ce que, dans une position de contact du dispositif de pose de tringle (2), le pied de tringle (20) et l'ébauche de tissu de carcasse (10) se touchent et/ou qu'un élément de renforcement de talon agencé sur le pied de tringle (20) et l'ébauche de tissu de carcasse (10) se touchent, et **en ce que**
- lors de l'étape de formage, la force de formage est exercée par le dispositif de pose de tringle (4) sur le pied de tringle (20).

6. Procédé selon la revendication 5, **caractérisé en ce que**, lors de l'étape de formage, le dispositif de pose de tringle (4) est agencé dans la position de contact.

7. Procédé selon l'une quelconque des revendications 5 ou 6, **caractérisé en ce que** le dispositif de pose de tringle (4) présente une couronne magnétique (24) par laquelle il maintient le pied de tringle (20) lors de la deuxième étape de positionnement, notamment par attraction magnétique d'une tringle de talon (18) reliée au pied de tringle (20).

8. Machine de fabrication de pneus pour la mise en œuvre du procédé de fabrication d'un pneu à air selon l'une quelconque des revendications précédentes, présentant un tambour de carcasse (2) et un dispositif de pose de tringle (4) réalisé séparément du tambour de carcasse (2), le dispositif de pose de tringle (4) étant adapté pour maintenir un pied de tringle (20) indépendamment du tambour de carcasse (2) et pour amener le pied de tringle (20) vers le tambour de carcasse (20) dans sa direction axiale (28), le dispositif de pose de tringle (2) présentant au moins un dispositif de formage (36, 38, 40) actionné par fluide, au moyen duquel une force de formage peut être exercée par le dispositif de pose de tringle (4) sur un pied de tringle (20) pouvant être agencé entre le tambour de carcasse (2) et le dispositif de pose de tringle (4), **caractérisé en ce que** le dispositif de formage (36, 38, 40) actionnable par fluide présente un premier soufflet pressurisable et expansible (38), qui est adapté pour exercer une pression dans la direction axiale (28) du tambour de carcasse (2), et un deuxième soufflet pressurisable et expansible (40), qui est adapté pour exercer une pression dans la direction radiale (46) du tambour de carcasse (2).

9. Machine de fabrication de pneus selon la revendication 8, **caractérisée en ce que** l'au moins un dispositif de formage (36, 38, 40) actionnable par fluide présente au moins un soufflet pressurisable et expansible (38, 40), dont la paroi extérieure (42, 44) est adaptée pour exercer la force de formage sur le pied de tringle (20) pouvant être agencé entre le tambour de carcasse (2) et le dispositif de pose de tringle (4).

10. Machine de fabrication de pneus selon la revendication 9, **caractérisée en ce que** le dispositif de formage (36, 38, 40) présente un troisième soufflet pressurisable et expansible, qui est adapté pour exercer une pression dans la direction axiale (28) et dans la direction radiale (46) du tambour de carcasse (2).

11. Machine de fabrication de pneus selon l'une quelconque des revendications 8 à 10, **caractérisée en ce que** le dispositif de pose de tringle (4) présente une couronne magnétique (24) adaptée pour maintenir un pied de tringle (20), notamment par attraction magnétique d'une tringle de talon (18) reliée au pied de tringle (20).
